# EUROPEAN PATENT APPLICATION

(11) **EP 4 847 419 A1**
(43) Date of publication of application: **02.12.2026**
(21) Application number: 25179961.5
(22) Date of filing: 30.05.2025
(51) Int. Cl.: B65G 1/04, B65G 1/137

(54) **BRAKE OPTIMISATION**

(71) Applicant: AutoStore Technology AS, 5578 Nedre Vats (NO)
(72) Inventor: Matyas Novak, Samuel, 5578 Nedre Vats (NO); Diekmann, Martin, 5578 Nedre Vats (NO)
(74) Representative: Kilburn & Strode LLP

(57) **Abstract**

The disclosure relates to a computer-implemented method performed by a control system of an automated storage and retrieval system. The method comprises receiving an expected configuration of a port of the automated storage and retrieval system. Based on the expected configuration, application of a brake of a gripping device of a container handling vehicle is optimised. The control system instructs the container handling vehicle to hold the gripping device at a height within a port column of the automated storage and retrieval system above a port based on the optimisation. The control system receives information regarding a transfer status of the port and instructs the container handling vehicle to transfer a storage container at the port based on the received information.

## Description

### TECHNICAL FIELD

The disclosure relates to brake optimisation. More particularly, it relates to a computer-implemented method, a system and a computer-readable medium for optimising brake application for transfer of a storage container.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed. The container-handling vehicles comprise a gripping device for releasable attachment to the containers. One or more brakes may be provided on the gripping device to halt movement of the gripping device.

Typically, the container-handling vehicles transport containers from the grid to ports or stations at the periphery of the grid via port columns. Port columns comprise port or access columns allowing transfer of a container in and/or out of the grid. Port columns provide a vertical channel for lifting of a container from, or lowering of a container to, a port or ports. A control system of the automated storage and retrieval system is used to coordinate the transfer of a container at a port. Transfer of a storage container at a port include the depositing of a container at the port as well as the retrieval of a container from the port.

When coordinating transfer of a container, known control systems instruct container-handling vehicles on actions to be performed to enable transfer of the container via a port. However, existing processes that coordinate the actions to be performed by container-handling vehicles introduce inefficiencies into the throughput of the ports.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first container handling vehicle suitable for use in the system of Fig. 1;
Fig. 3B shows a side view of a second container handling vehicle suitable for use in the system of Fig. 1;
Fig. 3C is a perspective side view of the robot of Fig. 3B;
Fig. 4 shows a computing device for implementing the operations described herein;
Fig. 5 shows a system for transfer of a storage container;
Fig. 6 shows a view of a second container handling vehicle from below;
Fig. 7 shows an example of transfer of a storage container;
Fig. 8 shows an alternative example of transfer of a storage container to the example shown in Fig. 7;
Fig. 9 shows an alternative example of transfer of a storage container to the example shown in Fig. 7;
Fig. 10 shows a method performed by a control system of an automated storage and retrieval system for optimising transfer of a storage container;
Fig. 11 shows a method performed by a container handling vehicle of an automated storage and retrieval system for optimising transfer of a storage container;

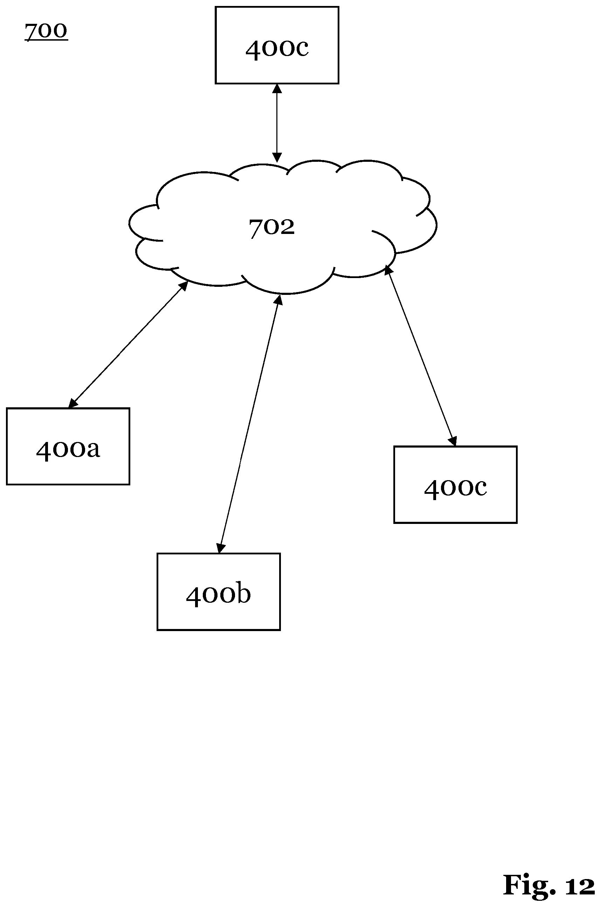

Fig. 12 shows a system architecture between entities in an automated storage and retrieval system according to the present disclosure.

### DETAILED DESCRIPTION

In overview, the disclosure relates to a computer-implemented method performed by a control system for optimising the transfer of containers within an automated storage and retrieval system (also referred to herein as simple a storage system) at a storage site (also labelled herein a 'real', 'physical', 'material', or 'tangible' storage site), such as a warehouse. A container may be transferred at a port in different ways. In one example, a container is deposited at a port via a port column. The container is moved within the port such that the container can be accessed from outside the port, e.g. to add one or more items into the container, to remove one or more items from the container or to remove the container from the port. Where the container is accessed from outside the port, in the case of modifying items within the container, the container may be returned to the port column for a container-handling vehicle to retrieve the container. In another example, a container may be inserted into the port from outside the storage grid. The inserted container is then moved from an access portion of the port to within the port column to be received by a container-handling vehicle. In another example, a container-handling vehicle deposits a container at a port column opening of the port, such that the deposited container can be moved by the port to an access portion of the port.

Container-handling vehicles comprise a lifting device, which may raise and lower containers within the storage grid to transfer the containers. The lifting device comprises a gripping device which releasably engages with a storage container. The lifting device comprises one or more brakes (also referred to herein as a gripper brake). The gripping device of the container handling vehicle may also be held at a position within a column of the storage grid. That is, the gripping device either with or without a storage container maybe be held at a position within a column of the grid, such as a port column. This position is a position above moving parts of a port such that there is no collision between the gripping device, or a storage container held by the gripping device, and the port or a storage container residing within the port. This height is referred to herein as post-depth. Different mechanisms may be used to hold the gripping device at post-depth. For example, the one or more brakes of the gripping device may be engaged, which holds the gripper device at post-depth until the one or more brakes are disengaged. The power source of the container-handling vehicle, e.g. a battery, may alternatively be used to hold the gripping device at post-depth. In this way, the power source of the container-handling vehicle may be used to drive a motor of the robot to hold the gripping device at a determined height.

A container-handling vehicle cannot indefinitely hold a gripping device at a determined height within a column of the storage grid, owing to the finite energy of the power source of the container-handling vehicle. Typically, when a container-handling vehicle receives an instruction from a control system of the storage system, the brake of the gripping device is engaged. Once the container-handling vehicle receives instructions to perform a subsequent action, such as transfer of a container, the gripper brake is disengaged.

Instructing the container-handling vehicle to engage the gripper brake automatically in response to being instructed to hold the gripping device, as well as instructing the container-handling vehicle to disengage the gripper brake automatically in response to being instructed to perform a subsequent action, leads to a decrease in the efficiency of the container-handling vehicle to handle containers. Engagement and/or disengagement of the gripper brake is not instantaneous. Therefore, where an instruction to transfer a container is received a short time interval before, or during, engagement or disengagement (or an instruction thereof) of the gripper brake, the gripping device is unable to be displaced to transfer the container until the gripper brake is fully disengaged. The lag introduced by waiting for the gripper brake to be disengaged, or engaged and then disengaged, leads to a reduction in throughput of a port when transferring containers.

The method of the present disclosure includes receiving an expected configuration of a port in a storage system. The expected configuration of the port is based on an expected future state of the port. For example, the expected configuration of the port indicates when or if the port will be available for transfer of a storage container, an expected time for the port to process a storage container and/or an expected sequence of operations to be performed by the port. Based on the expected configuration of the port, application of the gripper brake is optimised. For example, application of the brake is scheduled based on the expected configuration of the port. In some examples, the optimisation of the gripper brake comprises preventing application of the gripper brake for a time period, wherein the time period is based on the expected configuration. In other examples, the optimisation of the gripper brake comprises instructing engagement and/or disengagement of the gripper brake based on the expected configuration. In other examples, the optimisation of the gripper brake comprises instructing engagement of the gripper brake following a time period if no instruction to transfer a storage container at the port is received within the time period, wherein the time period is based on the expected configuration.

The method of the present disclosure includes instructing the container-handling vehicle to hold the gripping device at a height above a port within a port column of the storage system, i.e., hold the gripping device at post-depth, based on the optimisation. By using the gripper brake optimisation to control how the container-handling vehicle holds the gripping device at post-depth, throughput of a port of the storage system is increased. This is because the expected configuration of the port is used to determine whether to apply the gripper brake to hold the gripping device at post-depth, whether to use the power source of the container-handling vehicle to hold the gripping device at post-depth or whether to use a mixture of the gripper brake and the power source of the container handling vehicle to hold the gripping device at post depth. By doing this, the gripping device is ready to be displaced to transfer a storage container based on information received by the control system regarding a transfer status of the port such that delays in transferring a storage container are reduced. That is, the method includes receiving information regarding a transfer status of the port. The method of the present disclosure includes using the received information to instruct the container-handling vehicle to transfer the storage container.

Accordingly, methods and systems of the present disclosure enable a storage system in which throughput of ports are increased for all types of container transfer, whilst decreasing delays which are caused due to the time taken to operate the gripper brakes. Operation of the gripper brakes, for example to disengage the gripper brakes such that the gripping device can be displaced to transfer a container, when a port is available for transfer of a container reduces the efficiency of container transfer at the port. In particular, the methods of the present disclosure enable the movement of the gripping device to be controlled based on optimisation of the gripper brake, wherein the optimisation of the gripper brake is determined using an expected configuration of the port.

### Automated storage and retrieval system overview

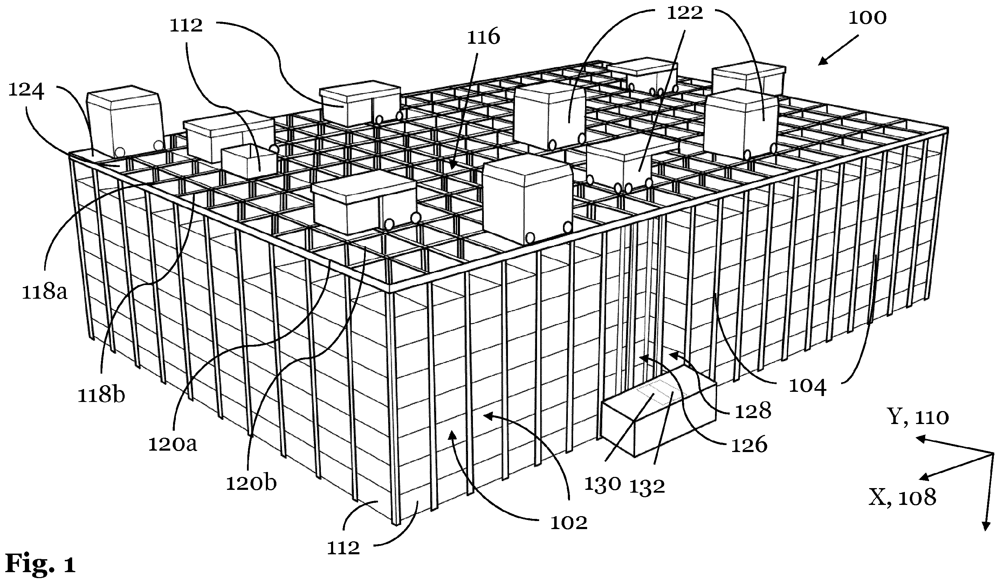

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

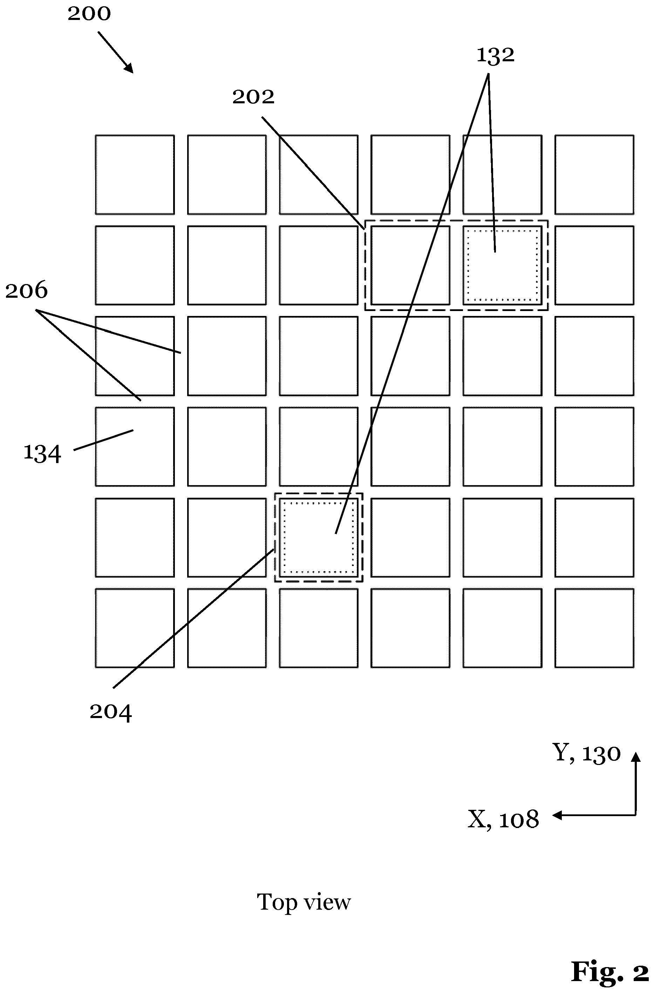

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

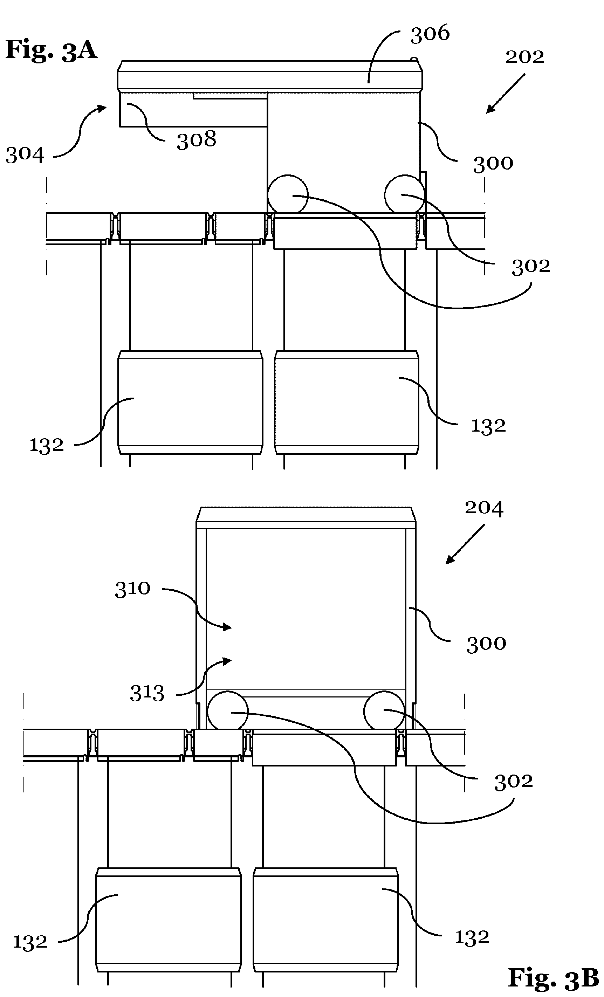

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

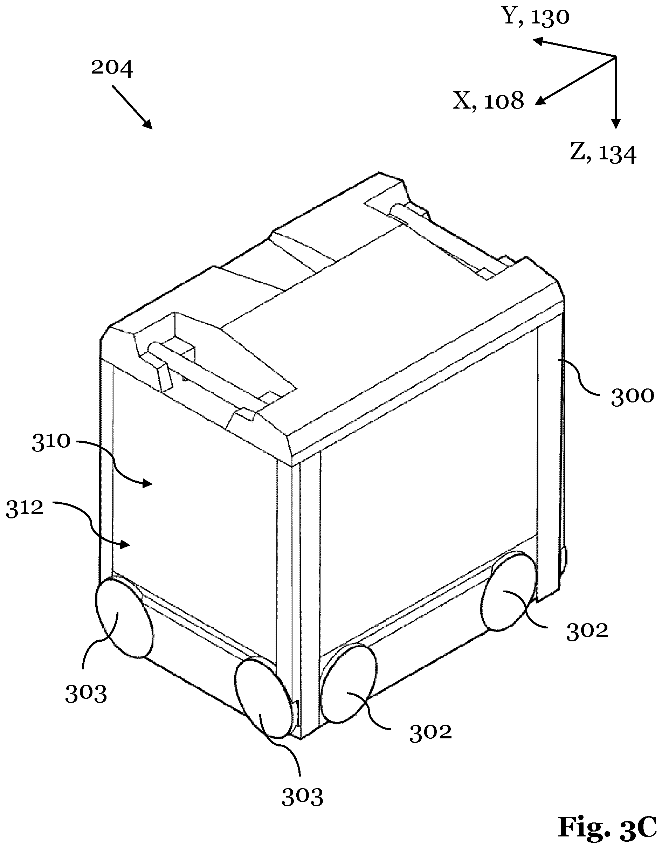

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

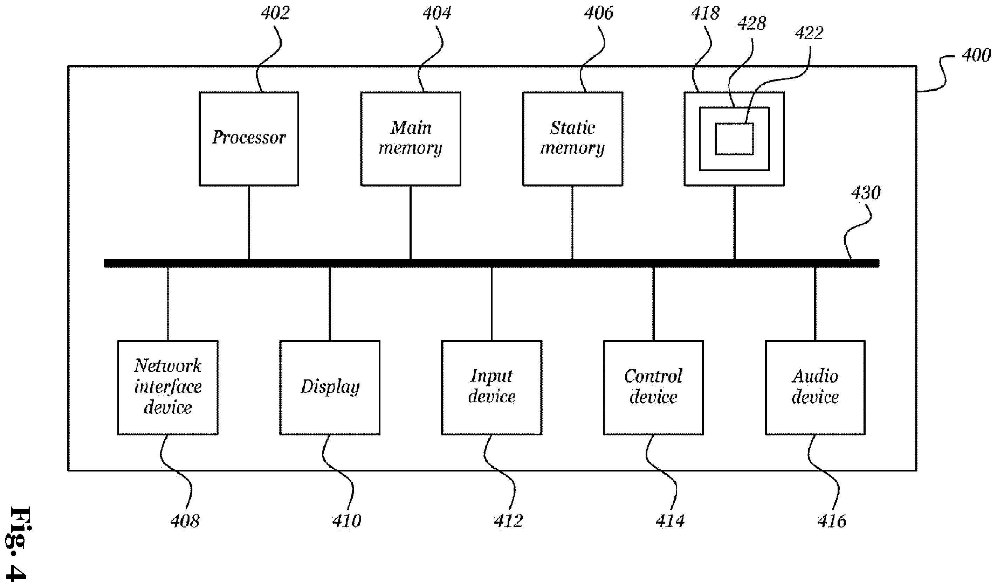

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

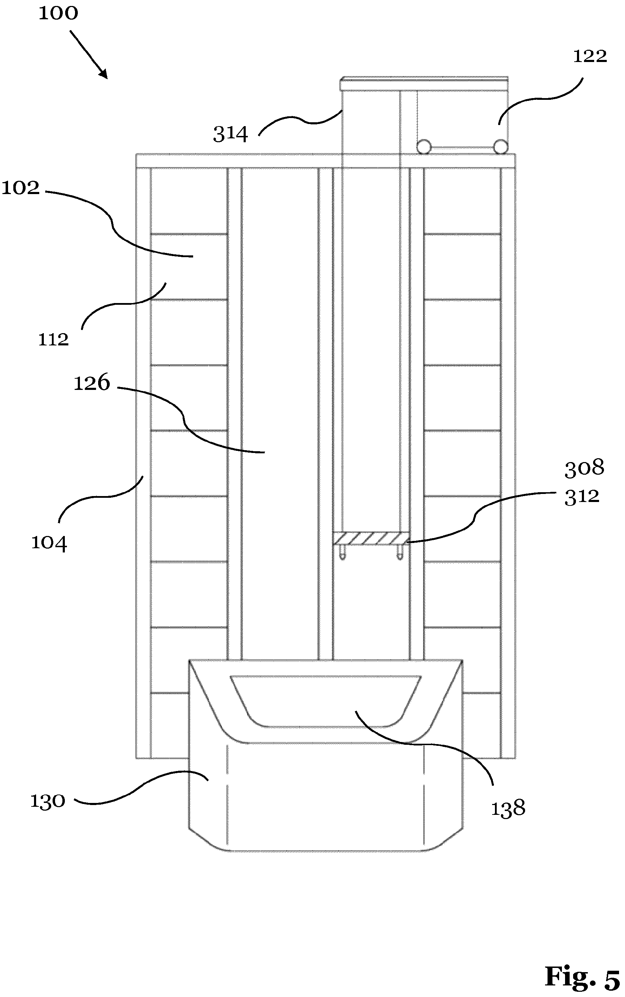

To help with understanding of the present disclosure and the systems and methods described herein, Fig. 5 shows an example of a storage system 100 in which one or more container handling vehicles 122 operate. Similarly to Fig. 1 above, the storage system comprises at least column 102 in which a container 112 may be stored. For example, containers 112 may be stored in self-supporting stacks within the storage column 102. The storage system 100 further comprises at least one port column 126 through which containers 112 may be transferred between the storage grid and a port 130. The container handling vehicle (also referred to herein as a robot) 122 comprises a lifting device 312 for displacing a gripping device 308. For example, the lifting device 312 may comprise lifting bands 314 to facilitate the displacement of the gripping device 308.

As can be seen in Fig. 5, the port 130 comprises an access point 138 through which a container 112 in the port may be accessed from outside the storage system. For example, a container 112 accessible through the access point 138 of the port may be accessed by a human operator or by a drone such as an automated goods vehicle. There are different types of ports 130 which may be used in the storage system 100. For example, some ports 130 comprise a conveyor belt or form of conveyor which laterally moves a container between the access point 138 and a port column access point in the port 130. Other ports, such as the AutoStore CarouselPort^{™} comprise one or more arms in the port 130, wherein each arm is configured to support a storage container and wherein each arm is configured to rotationally move a storage container between a port column access point in the port 130 and the access point 138.

When a robot 122 is instructed to deposit a storage container at a port 130, the robot 122 uses its lifting device 312 to displace its gripping device 308 into a port column 126 of the storage system 100. Owing to moving parts of the port 130, the robot 122 is instructed by a control system to displace the gripping device 308 to avoid collision of the gripping device 308, or a collision of a container 112 being held by the gripping device 308, with moving parts of the port 130 or with a container 122 in the port 130 awaiting transfer. The robot 122 may comprises a controller which is configured to receive instructions from the control system.

The control system may instruct the robot 122 to hold the gripping device 308 at a position within the port column 126. A position within the port column 126 above the port 130 is referred to herein as post-depth. The position of the gripping device 308 when being held at post-depth is predetermined. In some examples, the post-depth position is within a distance of moving parts of the port 130 of at most the height of a container. That is, the lowermost point of the gripping device 308, or the base of a container 112 being held by the gripping device 308, is at most a height of a storage container 112 above the moving parts of the port 130. In other examples, the control system may determine the post-depth height based on the port type of the port 130. In another example, the control system determines a height at which to hold the gripping device 308 based on an expected configuration of the port 130. For example, the control system may determine to hold the gripping device 308 as close as possible to the port 130 within a tolerance.

The control system may instruct the robot 122 to hold the gripping device 308 in anticipation of a subsequent action to be performed at the port 130. For example, the robot 122 may be instructed to hold the gripping device 308 of the robot 122 at post-depth whilst awaiting a transfer of a storage container, or where a future transfer of a storage container is anticipated, at the port 130. The gripping device 308 may be held at post-depth without a container 112 or whilst holding a container 112. The robot 122 may hold the gripping device 308 at post-depth in numerous ways. For example, the robot 122 may use a gripper brake to hold the gripping device 308 at post depth. The lifting device 312 of the robot 122 comprises a gripper brake at a point between a motor which powers the lifting device 312 and the gripping device 308. When the brake is engaged, movement of the gripping device 308 is prevented, thereby holding the gripping device 308 at a fixed height until the brake is disengaged. The gripper brake may be a pneumatic brake, a mechanical brake or an electromechanical brake. For example, the gripper brake may comprise a mechanical brake such as a disc brake. The gripper brake may additionally or alternatively comprise a ratchet and pawl-like brake in which a toothed wheel is configured to engage with a pin that prevents rotation of the toothed wheel when engaged.

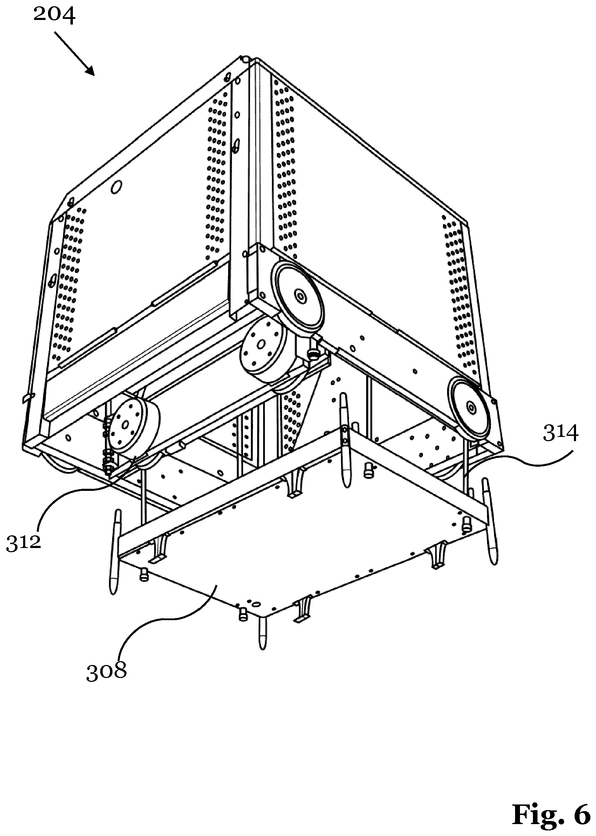

To help with the understanding of the robot 122 of the present disclosure, a second type of robot 204 (referred to herein as an internal cavity robot) is depicted. Whilst the internal cavity robot 204 is depicted in Fig. 6, the principles discussed herein in relation to the internal cavity robot 204 equally apply to the first type robot (referred to herein as a cantilever robot 202). The internal cavity robot 204 comprises a lifting device 312. The lifting device 312 includes a gripping device 308. The gripping device 308 is configured to be displaced by the lifting device 312, for example, via a plurality of lifting bands 314. However, other displacement mechanisms may be used to displaced the gripping device 308.

The lifting device 312 comprises one or more brakes, referred to herein as a gripper brake. The one or more gripper brakes are arranged between a motor of the lifting device 312 and the gripping device 308. For example, the one or more gripper brakes may be arranged between the motor and the lifting bands 314 to prevent displacement of the gripping device 308. The gripper brakes are configured to control displacement of the gripping device 308. For example, when engaged, the one or more gripper brakes prevent displacement of the gripping device 308. Similarly, when disengaged, the one or more gripper brakes permit displacement of the gripping device 308. The gripper brake may be a pneumatic brake, a mechanical brake or an electromechanical brake. For example, the gripper brake may comprise a mechanical brake such as a disc brake. The gripper brake may additionally or alternatively comprise a ratchet and pawl-like brake in which a toothed wheel is configured to engage with a pin that prevents rotation of the toothed wheel when engaged.

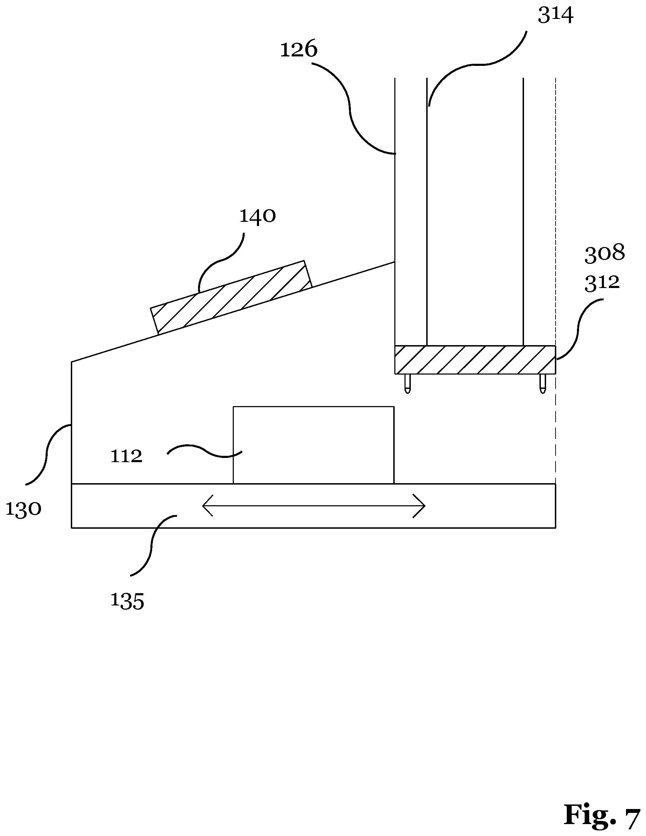

To help with understanding the present disclosure and the methods described herein, Figs. 7 to 9 depict different ways in which a container 112 may be transferred at a port 130. In the examples depicted in Figs. 7 to 9, a port 130 is depicted. The port 130 comprises a conveyor belt 135 to displace a container 112 between an access point in the port 130 for external access of the container 112, such as hatch 140, and a port column 126. Whilst a conveyor belt 135 is depicted in Figs. 7 to 9, other forms of conveyors may be used to convey a container between an access point of the port 130 and the port column 126. For example, a rotating arm such as that used in AutoStore's CarouselPort^{™} may be used to convey storage containers 112.

Also depicted in Figs. 7 to 9 is a port column 126. Whilst not depicted in Figs. 7 to 9, a robot 122 has displaced the gripping device 308 of its lifting device 312 into the port column 126. The lifting device 312 depicted in Figs. 7 to 9 is illustrated with lifting bands 314 to displace the gripping device 312. However, other displacement mechanisms may be used to displace the gripping device 308.

Fig. 7 illustrates an example where a container 112 within the port 130 is to be retrieved by a robot 122. In this example, the gripping device 308 is held at post-depth by the robot 122 whilst awaiting the container 112 to be ready for transfer into the port column 126. Fig. 7 illustrates an example of transfer of a container referred to herein as 'bin exchange'. In bin exchange, a container 112 is deposited at the port 130 via a port column 126. For example, a robot 122 deposits the container 112 at the port 130 following an instruction from the control system to deposit the container 112 at the port 130 via the port column 126. In bin exchange, the container 112 is conveyed to the opening of the port 130, such as the hatch, for modification. For example, contents are removed from the container 112 via the hatch 140 of the port 130. Alternatively or additionally, contents may be added to the container 112 via the hatch 140. In some examples, an operator may decide not to modify the contents of the container 112 following presentation of the container 112 at the hatch 140. Following modification of the container 112, the container 112 is conveyed back towards the port column 126 for retrieval by the robot 122. Whilst the container 112 is being modified, the gripping device 308 is held at post-depth awaiting the container 112 to be returned to the port column 126 for retrieval of the container 112.

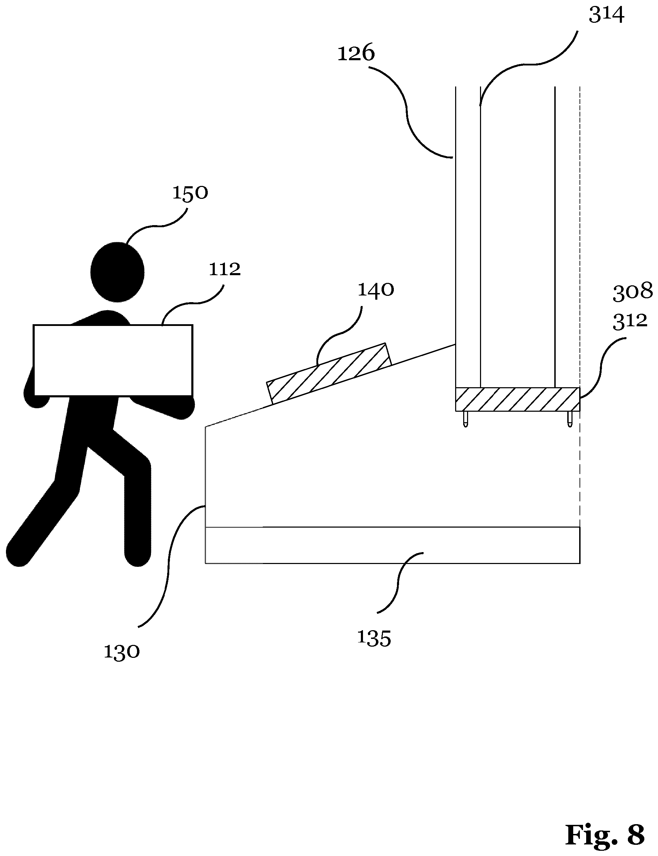

Fig. 8 illustrates an example where a port 130 is awaiting insertion of a container 112. For example, the container 112 is to be inserted into the storage system 100 via the port 130 by a human operator 150 or a drone, such as an autonomous goods vehicle. The human operator 150 or drone transports a container 112 external to the storage system 100 into the storage system 100. The container 112 may be inserted into the port via the hatch 140 or other access point of the port 130. The gripping device 308 of the robot 122 is held at post-depth awaiting a container 112 to be inserted into the port column 126 for retrieval by the robot 122. Fig. 8 illustrates an example of transfer of a container referred to herein as 'bin insert'.

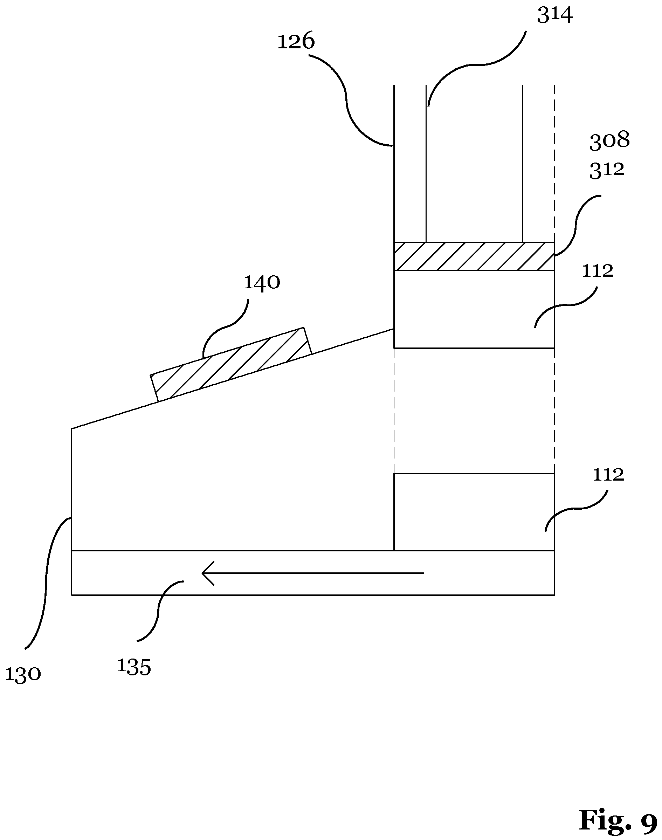

Fig. 9 illustrates an example where the gripping device 308 of a robot 122 is holding a first container 122. The robot 122 has, for example, received an instruction from the control system to deposit the first container 122 at the port 130. Fig. 9 illustrates an example of transfer of a container referred to herein as 'bin insert'. In Fig. 9, it can be seen that there is a storage container 112 at the base of the port 130. Therefore, the second container 112 obstructs the robot 122 from depositing the first container 112 at the port 130. To prevent collision between the first container 112 and the second container 112, the first container 112 is held at post-depth by the robot 122 until the port column access point of the port 130 is available for the first container 112 to be deposited. Where a robot 122 holds a first container 112 at post-depth, this may be for reasons other than a second container 112 obstructing the port column access point of the port 120. For example, a moving part of the port 130 may prevent the first container 112 being held by the gripping device 308 from being deposited. Once the port column access point of the port 130 is available to receive a container, such as the first container, the robot 122 may deposit the first container 112 at the port 130 to transfer the first container 112.

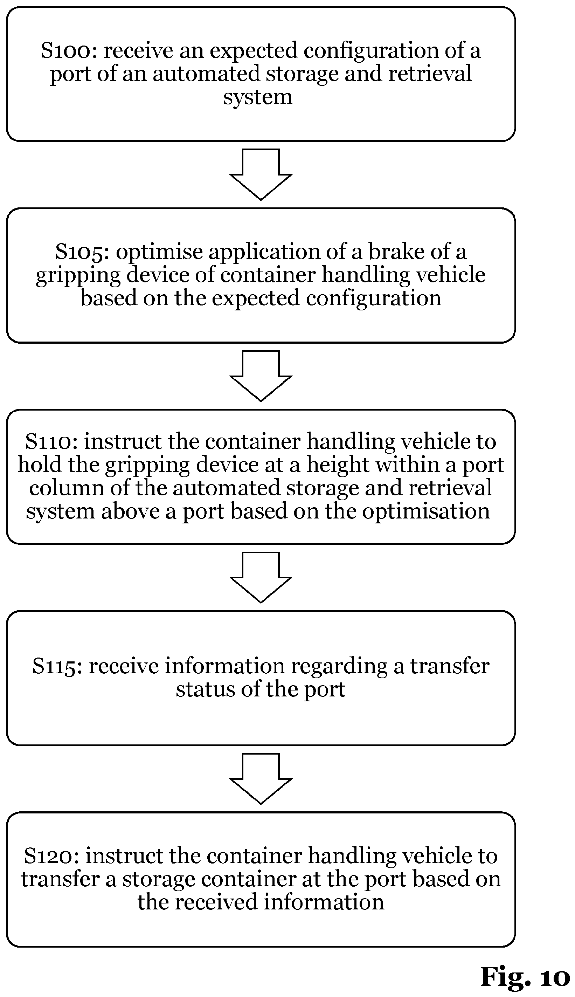

Fig. 10 depicts a flowchart showing a method for transferring a storage container according to the present disclosure. At least a portion of the method is computer-implemented. In some examples, any of the operations of the method is carried out by a control system which may be a computing system, such as the computing device 400 described with respect to Fig. 4. The automated storage and retrieval system may comprise any embodiment of the storage systems otherwise described herein, particularly with respect to Figs. 1-3C. The storage site may include any suitable or desired location for an automated storage and retrieval system according to the present disclosure. For instance, the storage site may be at least a portion of a warehouse, a depot, a storehouse, a storeroom, a stockroom, and/or a storage zone at a property such as a commercial premise.

As shown in Fig. 10, the method for transferring a storage container may start at S100 at which an expected configuration of a port of an automated storage and retrieval system is received. The expected configuration is received, for example, at a control system of the storage system. The expected configuration of the port 130 could be received from a port 130 of the storage system 100. Additionally or alternatively, the expected configuration of the port may be received from the control system. For example, historic information of the port 130, such as historic container processing times or historic sequences of operations performed by the port 130, may be stored in memory of the control system. Where the expected configuration of the port 130 is contained within the control system itself, S100 may be dispensed with.

The expected configuration of the port 130 comprises information of an expect future state of the port. For example, the expected configuration of the port may include a port type of the port 130 where a container 112 is to be transferred, expected processing time of the port 130, an expected sequence of events of the port 130 and/or an expected availability of the port for transfer of a container 112.

The expected configuration of the port may be based on a type of transfer of container 112 that is to occur at the port 130. For example, in 'bin exchange', a sequence of operations to occur at the port is to displace a container 112 from the port column 126 to an access point of the port 138, 140 and then back to the port column 126. In 'bin insert', the expected sequence of operations is to wait for a container 112 to be inserted into the port via an access point 138, 140 and then displace the container 112 from the access point 138, 140 of the port 130 to the port column 126. In 'bin put', an expected sequence of operations may comprise displacing a second container 112 from the port column 126 to an access point 138, 140 of the port 130 to enable a first container 112 to be deposited at the port 130. Alternatively, in 'bin put', an expected sequence of operations may comprise displacing a conveying mechanism of the port 130 to enable a first container 112 to be deposited at the port 130. Other operations may additionally or alternatively be included in each of the bin exchange, bin insert and bin put examples described above.

Each operation that is performed at the port 130 has an expected duration. The expected duration of each operation in the sequence of operations may be added together to determine an expected time for the port 130 to process a container 112. The expected time for processing a container within the port 130 may be based on the port type of the port 130.

Once the expected configuration of the port 130 is available at the control system, at S105 the control system optimises application of the gripper based on the expected configuration. For example, using the expected configuration, the control system determines optimisation instructions for the robot 122 to optimise application of the gripper brake. The optimisation of the application of the gripper brake may comprise determining a scheduling for the gripper brake. For example, the scheduling of the gripper brake may comprise engagement of the brake, prevention of engagement of the brake, disengagement of the brake of a combination of engagement, disengagement and/or prevention of the brake based on the expected configuration of the port 130.

In some examples, the optimisation of the gripper brake application comprises determining a time period for which application of the gripper brake is to be prevented. The determined time period is based on the expected configuration of the port. For example, where the expected configuration of the port includes information regarding an expected availability of the port 130 to transfer a container 112, the determined time period may be determined to be at least as long as the time until the port 130 is expected to be available. In some examples, the determined time period may be at least an upper bound of the time until the port 130 is expected to be available. In some examples, the determined time period may include a tolerance, for example, between 1% to 30% of the expected time, in addition to the time until the port 130 is expected to be available.

Similarly to the examples mentioned herein, the determined time period may additionally or alternatively be based on an expected sequence of operations of the port 130. As described above, the expected configuration of the port may comprise an expected sequence of operations performed by the port 130. Each operation of the sequence of operations may comprise an expected or average time of completion. Using the total expected time for the sequence of operations performed at the port 130, a time period for prevention of application of the gripper brake may be determined.

Determining a time period in which application of the gripper brake is to be prevented is particularly advantageous where transfer of a container 112 is deterministic - i.e., where it can be determined when a container 112 is likely to be available for transfer. Bin exchange as described above is a deterministic operation as bin exchange relates to components which are a part of the storage system 100. Bin put may also be deterministic where containers 112 are remaining within the storage system 100.

Where transfer of the container 112 is deterministic, a gripper brake may be prevented from being applied such that a power source of the robot 122 is used to hold the gripping device 308 at a fixed height such as at S110. In this way, where the control system receives transfer status information of the port at S115, for example, that the port 130 is available for transfer of a container 112 or that a port 130 will be available for transfer at a specified time, the robot 122 is able to quickly displace its gripping device 308 to the port 130 (S120) without having to wait for the gripper brake to be disengaged.

A determined time period during which application of the gripper brake is prevented may be combined with periods where the gripper brake is configured to be engaged. For example, based on the expected configuration of the port 130, the optimisation may comprise determining to engage the gripper brake for a first period, determining to disengage the brake following expiry of the first period and preventing application of the gripper brake for a second time period after the first time period. Where application of the gripper brake is prevented, a power source of the robot 122 is used to hold the gripping device 308 at a fixed height.

Where the expected configuration of the port 130 comprises an expected time that is greater than a threshold expected time, the optimisation may be configured to have at least one period of engagement of the gripper brake to hold the gripping device 308 at post-depth and at least one period where engagement of the gripper brake is prevented such that a power source of the robot 122 is used to hold the gripping device 308 at post depth. Using the gripper brake 308 to hold the gripping device 308 at post-depth consumes less power than using the power source of the robot to hold the gripping device at post-depth. The threshold expected time may be based on a power consumption of the robot 122. For example, a predetermined threshold expected time may be selected such where holding of the gripping device 308 using the power source of the robot 122 for the predetermined threshold expected time exceeds a predetermined power consumption allocation. A power consumption allocation for holding of the gripping device 308 may be determined to prevent holding of the gripping device 308 from causing excess strain on the power source or motor of the robot 122. Where it is determined that the expected configuration of the port 130 exceeds the predetermined threshold expected time, the optimisation comprises scheduling the gripper brake to be engaged for a first time period less than the predetermined threshold expected time, scheduling the gripper brake to be disengaged after the first time period and before expiry of the predetermined threshold expected time and preventing the brake from being engaged for a second time period following the predetermined threshold expected time.

As stated above, holding the gripping device 308 of the robot at a post-depth position using the power source of the robot cannot be performed indefinitely owing to the limited power of the robot 122. As holding the gripping device 308 at post-depth without using the gripper brake uses the power source of the robot, the present disclosure may include additional operations to mitigate strain being placed on the power source or motor of the robot 122.

For example, the method depicted in Fig. 10 may further comprise instructing the robot to override an instruction to hold the gripping device 308 at post-depth by prevent application of the gripper brake. To override the instruction to hold the gripping device 308 at post-depth, the robot 122 may send the control system information about its power consumption. For example, the robot 122 may periodically update the control system on its power consumption metrics or may update the control system on its power consumption metrics in response to a threshold power consumption being exceed. The control system may make a determination based on the power consumption of the robot 122 that a threshold power consumption is exceeded. In response to the control system determining that a threshold power consumption is exceeded, the control system may instruct the robot 122 to engage the gripper brake, thereby overriding a previous instruction to prevent engagement of the gripper brake. Alternatively, the control system may instruct the robot 122 to monitor its own power consumption metrics. In this example, the control system further instructs the robot 122 to apply the gripper brake in response to the robot 122 detecting that its power consumption exceeds a threshold power consumption. The threshold power consumption may be selected such that strain on the power source and/or motor of the robot 122 is minimised.

In other examples, alternatively, or in addition, to a power consumption threshold, a current power level (such as remaining battery life) may be used by the control system to determine to instruct the robot 122 to override a previous instruction to prevent engagement of the gripper brake. Similarly, performance of the robot 122 may be monitored. For example, if holding the gripping device 308 at post-depth using the power source of the robot 122 causes the performance of the robot 122 to decrease (e.g. motor(s) or transistors in the robot 122 produce excess heat), the control system may instruct the robot to override a previous instruction to prevent application of the gripping mechanism.

Optimising gripper brake application so as to include a time period within which application of the brake is prevented may also be applied to the 'bin put' example. In 'bin put', the gripping device 308 is instructed to deposit a container 112 at the port 130. Owing to the port 130 not being available for transfer of the container 112, the robot 122 is instructed to hold the gripping device 308 at a post-depth position. In the case of 'bin put', the robot 122 is configured to hold a container 112 at post-depth. As the container 112 has a non-negligible weight, the power used to hold the gripping device and the container 112 at post-depth using the power source will be greater than just holding the gripping device 308 at post-depth. The greater the weight of the container 112 being held by the gripping device 308, the more power is consumed by holding the gripping device 308 at post-depth.

Therefore, where the optimisation of the gripper brake application comprises determining a time period in which application of the gripper brake is to be prevented, the optimisation may further be based on the weight of the container 112. The weight of the container 112 is known by the control system. The time period in which application of the gripper brake is to be prevented as described above may be based on holding a gripping device 308 at post-depth without a container 112. The determined time period for preventing application of the gripper brake may proportionately decrease with increased container weight. For example, the greater the container weight, the shorter the time period during which application of the gripper brake is prevented.

Similarly to that described above, a threshold power consumption threshold may be used to instruct the robot 122 to engage the gripper brake to override a previous instruction to prevent application of the gripper brake in the case of 'bin put'. Alternatively, or in addition, to a power consumption threshold, a current power level (such as remaining battery life) may be used by the control system to determine to instruct the robot 122 to override a previous instruction to prevent engagement of the gripper brake.

Optimising gripper brake application may also comprise determining, following expiry of the time period in which gripper brake application is prevented, to apply the gripper brake. This is useful, for example, where there is an unexpected error in, or delay at, the port which causes the port 130 to take longer than expected in the expected configuration of the port to be available for transfer of the storage container.

Referring to the 'bin insert' example depicted in Fig. 8, the insertion of the container 112 may be non-deterministic. This is because insertion of the container 112 into the system varies based on factors which may not be accurately predicted. With 'bin insert' the expected configuration of the port may comprise information indicating that there is no scheduled transfer of container 112 at the port. In response to receiving the information that there is no scheduled transfer at the port 130, the control system instructs the robot 122 to hold the gripping device 308 at post-depth using the gripper brake. At a later point, an operator 150 or a drone commences loading of a container 112 into the port. Following the loading of a container 112 into the port 130, a second expected configuration of the port 130 is sent to the control system. For example, the port may send a second expected configuration of the port 130 once the container has been loaded into the port 130. The second expected configuration may comprise the expected configurations described herein. Based on the second expected configuration, the control system may further optimise application of the gripper brake in accordance with the gripper brake optimisation described herein.

As stated above and as depicted in S105 of Fig. 10, the control system uses the expected configuration of the port to optimise application of the gripper brake. For the case where there is a bin in the port, such as in 'bin exchange' or in 'bin put', the expected configuration may indicate when a port is expected to be available to transfer the container. Where there is no bin in the port to be transferred, such as in 'bin insert', the expected configuration may indicate that there is no scheduled transfer at the port. Following insertion of a container into the port, a second expected configuration may be provided to the control system. Using the expected configuration, optimisation of application of the gripper brake may comprise determining a time period to prevent application of the brake. The time period may comprise an upper bound of a time at which the port is expected to be available based on the expected configuration. A tolerance may be in the determined time of when the port is expected to be available for transfer. Where the brake is prevented from being applied, any instruction to hold the gripping device at a determined height comprises using the power source of the robot to hold the gripping device in place. For example, the power source of the robot is used to drive a motor of the lifting device to hold the gripping device at the determined position within the port column. Prevention of application of the gripper brake may be applied in each of 'bin exchange', 'bin insert' and 'bin put'.

At S110, an instruction is sent from the control system to the robot 122 to hold the gripping device at post-depth based on the optimisation. As described above, the optimisation may comprise instructions for the robot 122 on how to apply the gripper brake. Where there is an instruction to hold the gripping device 308 at post depth whilst preventing application of the gripper brake, the robot 122 is instructed to use its power source to hold the gripper brake at the predetermined height (i.e. at post-depth). The optimisation information schedules the application, or lack of application, of the gripper brake to hold the gripping device at post-depth.

Following the instruction to hold the gripping device 308 at post-depth based on the optimisation, the method includes receiving information regarding a transfer status of the port S115. The transfer status of the port 130 comprises information indicating that the port 130 is available for transfer of a container 112. Alternatively, the transfer status of the port 130 comprises information indicating a time at which the port 130 will be available for transfer of the container 112. For example, in the case of bin exchange or bin insert, information indicating that the port 130 is available or will be available for transfer of the container 112 may comprise information that the container 112 is being displaced towards the port column 126 or that the container is available in the port column 126 for transfer. In the case of bin put, information indicating that the port 130 is available or will be available for transfer of the first container 112 may comprise information that a second container 112 which was preventing the first container 112 from being deposited at the port is being displaced away from the port column 126 or that the second container has been displaced from the port column 126. Alternatively, information indicating that the port 130 is available for transfer of a container 112 may comprise information indicating that a moving part of the port 130 is in a position which is configurable to receive the container 112.

At S120 of the method of Fig. 10, the control system instructs the robot 122 to transfer the storage container at the port based on the received information regarding the transfer status of the port 130. For example, the control system instructs the robot 122 to displace the gripping device 308 to the port to transfer a container 112 at the port. Where the gripper brake is engaged when the control system instructs the container handling vehicle to transfer the storage container, the instruction further comprises instructing the robot 122 to disengage the gripper brake prior to instructing the robot 122 to displace the gripping device 308. For example, the control system may instruct the robot 122 to disengage the gripper brake (if engaged) following receipt of information indicating that the port is available for transfer of the container 122 and prior to displacement of the gripping device 308. Where the control system provides an instruction to the robot 122 to disengage the gripper brake before providing an instruction to the robot 122 to displace the gripping device 308, the robot 122 uses its power source to hold the gripping device 308 in place until the instruction to displace the gripping device 308 is received.

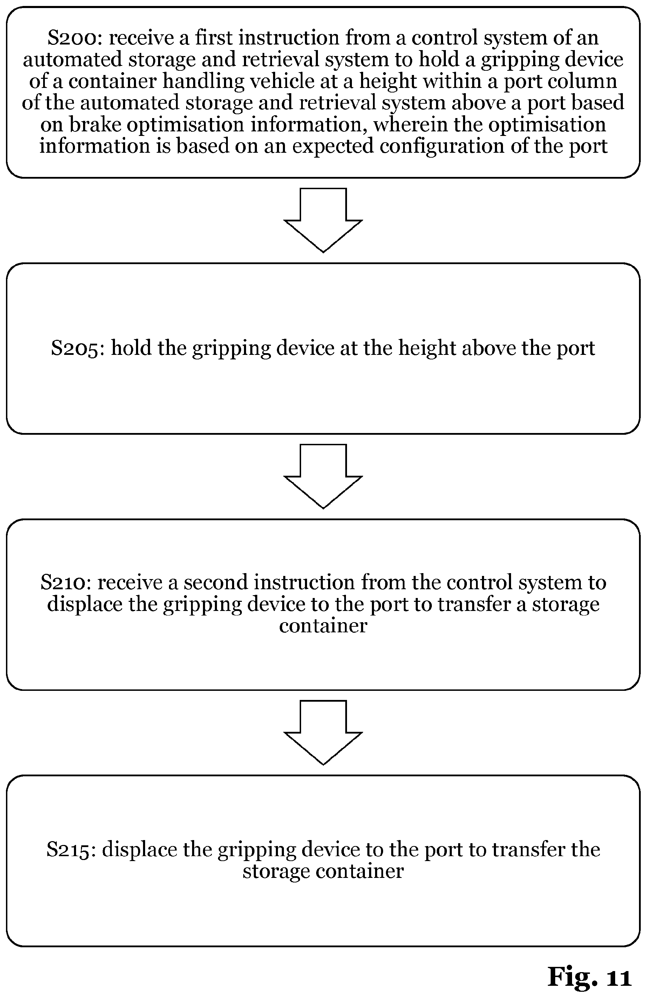

Fig. 11 depicts a flowchart showing a method for transferring a storage container according to the present disclosure. At least a portion of the method is computer-implemented. In some examples, any of the operations of the method is carried out by a robot 122. The robot 122 may comprise a controller which carries out the operations in Fig. 11; the controller may be a computing system, such as the computing device 400 described with respect to Fig. 4. The automated storage and retrieval system may comprise any embodiment of the storage systems otherwise described herein, particularly with respect to Figs. 1-3C. The storage site may include any suitable or desired location for an automated storage and retrieval system according to the present disclosure. For instance, the storage site may be at least a portion of a warehouse, a depot, a storehouse, a storeroom, a stockroom, and/or a storage zone at a property such as a commercial premise.

In S200 of Fig. 11, the method comprises receiving a first instruction from a control system of an automated storage and retrieval system to hold a gripping device of a container handling vehicle at a height within a port column of the automated storage and retrieval system above a port based on brake optimisation information, wherein the optimisation information is based on an expected configuration of the port.

In S205, the method comprises holding the gripping device at the height above the port. The instruction received from the control system causes the robot 122 to hold the gripping device 308 at the predetermined height within the port column 126. The robot 122 may hold the gripping device 308 at the height by engaging a gripper brake of the robot 122. Alternatively, the robot 122 uses its power source to hold the gripping device 308 at the height. For example, the power source of the robot 122 is configured to drive a motor of the robot 122 that powers the lifting device 312 of the robot 122 to hold the gripping device 308 at the determined height.

In S210, the method comprises receiving a second instruction from the control system to displace the gripping device to the port to transfer a storage container. The second instruction may further comprise an instruction to disengage the gripper brake if currently engaged. The second instruction may additionally or alternatively comprise a time period after which the robot 122 is to displace the gripping device 308. For example, the second instruction causes the robot 122 to displace the gripping device 308 after a time period specified in the second instruction.

In S215, the method comprises displacing the gripping device to the port to transfer the storage container. Displacing the gripping device 308 may comprise raising or lowering the gripping device 308 to the port 130. Transferring the container 112 comprises depositing and/or retrieving the container 112 from the port 130 according to any example of transferring a container 112 described herein.

The method of the present disclosure described in respect of the control system of the storage system also apply to the robot 122. That is, the robot 122 of the present disclosure are configured to execute instructions from the control system.

Fig. 8 shows system architecture 700 for implementing a the present disclosure. As shown, the system architecture 700 may comprise at least one robot 400a, 400b and at least one port 400c, which communicate with a central control system 400d and optionally with each other over a network 702. Each of the robots 400a, 400b, 400c and control system 400d may comprise a processing system 400 according to Fig. 4. However, control system 400d may dispense with a display 410, input device 412, control device 414, and audio device 416.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further, the present disclosure comprises the following clauses:
Clause B1. A computer-implemented method performed by a control system of an automated storage and retrieval system, the method comprising:
   receiving an expected configuration of a port of the automated storage and retrieval system;
   based on the expected configuration, optimising application of a brake of a gripping device of a container handling vehicle;
   instructing the container handling vehicle to hold the gripping device at a height within a port column of the automated storage and retrieval system above a port based on the optimisation;
   receiving information regarding a transfer status of the port;
   instructing the container handling vehicle to transfer a storage container at the port based on the received information.
Clause B2. The method of Clause B1, wherein the expected configuration comprises an expected storage container processing time of the port.
Clause B3. The method of Clause B1 or B2, wherein the expected configuration comprises an expected sequence of operations of the port.
Clause B4. The method of any preceding clause, wherein the expected configuration comprises an expected availability of the port for transfer of the storage container.
Clause B5. The method of any preceding clause, wherein optimising application of the brake comprises determining a time period to prevent application of the brake based on the expected configuration.
Clause B6. The method of Clause B5, wherein instructing the robot to hold the gripping device at the height comprises instructing the container handling vehicle to use a power source of the container handling vehicle to hold the gripping device at the height during the time period.
Clause B7. The method of Clause B6, further comprising:
   following expiry of the time period, instructing the container handling vehicle to engage the lift brake.
Clause B8. The method of any preceding clause, further comprising:
   instructing the container handling vehicle to engage the brake in response to detecting that a power consumption of the container handling vehicle exceeds a threshold power consumption.
Clause B9. The method of any one of clauses B1 to B4, wherein instructing the robot to hold the gripping device at the height comprises instructing the container handling vehicle to engage the brake of the gripping device.
Clause B10. The method of any of Clause B7 to B9, further comprising:
   in response to receiving the information regarding the transfer status of the port, instructing the container handling vehicle to disengage the brake.
Clause B11. The method of any one of Clause B5 to B8, wherein the time period is based on a weight of the storage container to be transferred.
Clause B12. The method of any preceding clause, wherein information status regarding the transfer status of the port comprises information indicating that the port is available to transfer the storage container.
Clause B13. An automated storage and retrieval system, comprising:
   a storage grid comprising a port column;
   a port;
   a container handling vehicle comprising gripping device, wherein the gripping device is configured to raise and lower a storage container; and
   a control system, wherein the control system is configured to:
      receive an expected configuration of the port;
      based on the expected configuration, optimise application of a brake of the gripping device;
      instruct the container handling vehicle to hold the gripping device at a height within the port column of the storage grid above the port based on the optimisation;
      receive information regarding a transfer status of the port; and
      instruct the container handling vehicle to displace the gripping device to the port to transfer the storage container; and
   wherein the container handling vehicle is configured to:
      hold the gripping device at the height within the port column in response to instruction from the control system; and
      displace the gripping device to the port to transfer the storage container in response to instruction from the control system.
Clause B14. A computer-implemented method performed by a container handling vehicle of an automated storage and retrieval system, the method comprising:
   receiving a first instruction from a control system of the automated storage and retrieval system to hold a gripping device of the container handling vehicle at a height within a port column of the automated storage and retrieval system above a port based on brake optimisation information, wherein the optimisation information is based on an expected configuration of the port;
   in response to receiving the first instruction, hold the gripping device at the height above the port;
   receiving a second instruction from the control system to displace the gripping device to the port to transfer a storage container; and
   in response to receiving the second instruction, displacing the gripping device to the port to transfer the storage container.
Clause B15. The method of Clause B14, wherein the expected configuration comprises an expected storage container processing time of the port.
Clause B16. The method of Clause B14 or B15, wherein the expected configuration comprises an expected sequence of operations of the port.
Clause B17. The method of any one of clauses B14 to B16, wherein the expected configuration comprises an expected availability of the port for transfer of the storage container.
Clause B18. The method of any one of clauses B14 to B17, wherein the brake optimisation information comprises a time period to prevent application of the brake based on the expected configuration.
Clause B19. The method of Clause B18, wherein the first instruction from the control system comprises an instruction to use a power source of the container handling vehicle to hold the gripping device at the height during the time period.
Clause B20. The method of Clause B19, wherein the brake optimisation information further comprises an instruction to engage the lift brake following expiry of the time period.
Clause B21. The method of any one of clauses B14 to B20, further comprising:
   receiving a third instruction from the control system to engage the brake in response to a power consumption of the container handling vehicle exceeds a threshold power consumption; and
   in response to receiving the third instruction, engaging the brake of the gripping device.
Clause B22. The method of clause B22, further comprising:
   monitoring the power consumption of the container handling vehicle; and
   in response to detecting that the power consumption of the container handling vehicle exceeds the threshold power consumption, engaging the brake of the gripping device.
Clause B23. The method of clause B22, further comprising:
   sending power consumption data of the container handling device to the control system.
Clause B24. The method of any one of clauses B14 to B27, wherein the first instruction to hold the gripping device at the height comprises an instruction to engage the brake of the gripping device.
Clause B25. The method of any of clauses B20 to B24, wherein the second instruction comprises an instruction to disengage the brake.
Clause B26. The method of any one of clauses B18 to B23, wherein the time period is based on a weight of the storage container to be transferred.
Clause B27. A computer-readable medium comprising instructions which, when executed by a processor of a control system of an automated storage and retrieval system, cause the control system to perform the method of any one of clauses B1 to B12.
Clause B28. A computer-readable medium comprising instructions which, when executed by a processor of a container handling vehicle of an automated storage and retrieval system, cause the control system to perform the method of any one of clauses B13 to B26.

## Claims

1. A computer-implemented method performed by a control system of an automated storage and retrieval system, the method comprising:
receiving an expected configuration of a port of the automated storage and retrieval system;
based on the expected configuration, optimising application of a brake of a gripping device of a container handling vehicle;
instructing the container handling vehicle to hold the gripping device at a height within a port column of the automated storage and retrieval system above a port based on the optimisation;
receiving information regarding a transfer status of the port;
instructing the container handling vehicle to transfer a storage container at the port based on the received information.

2. The method of claim 1, wherein the expected configuration comprises an expected storage container processing time of the port.

3. The method of claims 1 or 2, wherein the expected configuration comprises an expected sequence of operations of the port.

4. The method of any preceding claim, wherein the expected configuration comprises an expected availability of the port for transfer of the storage container.

5. The method of any preceding claim, wherein optimising application of the brake comprises determining a time period to prevent application of the brake based on the expected configuration.

6. The method of claim 5, wherein instructing the robot to hold the gripping device at the height comprises instructing the container handling vehicle to use a power source of the container handling vehicle to hold the gripping device at the height during the time period.

7. The method of claim 6, further comprising:
following expiry of the time period, instructing the container handling vehicle to engage the lift brake.

8. The method of any preceding claim, further comprising:
instructing the container handling vehicle to engage the brake in response to detecting that a power consumption of the container handling vehicle exceeds a threshold power consumption.

9. The method of any one of claims 1 to **4,** wherein instructing the robot to hold the gripping device at the height comprises instructing the container handling vehicle to engage the brake of the gripping device.

10. The method of any of claims 7 to 9, further comprising:
in response to receiving the information regarding the transfer status of the port, instructing the container handling vehicle to disengage the brake.

11. The method of any one of claims 5 to 8, wherein the time period is based on a weight of the storage container to be transferred.

12. The method of any preceding claim, wherein information status regarding the transfer status of the port comprises information indicating that the port is available to transfer the storage container.

13. An automated storage and retrieval system, comprising:
a storage grid comprising a port column;
a port;
a container handling vehicle comprising gripping device, wherein the gripping device is configured to raise and lower a storage container; and
a control system, wherein the control system is configured to:
receive an expected configuration of the port;
based on the expected configuration, optimise application of a brake of the gripping device;
instruct the container handling vehicle to hold the gripping device at a height within the port column of the storage grid above the port based on the optimisation;
receive information regarding a transfer status of the port; and
instruct the container handling vehicle to displace the gripping device to the port to transfer the storage container; and
wherein the container handling vehicle is configured to:
hold the gripping device at the height within the port column in response to instruction from the control system; and
displace the gripping device to the port to transfer the storage container in response to instruction from the control system.

14. A computer-implemented method performed by a container handling vehicle of an automated storage and retrieval system, the method comprising:
receiving a first instruction from a control system of the automated storage and retrieval system to hold a gripping device of the container handling vehicle at a height within a port column of the automated storage and retrieval system above a port based on brake optimisation information, wherein the optimisation information is based on an expected configuration of the port;
in response to receiving the first instruction, hold the gripping device at the height above the port;
receiving a second instruction from the control system to displace the gripping device to the port to transfer a storage container; and
in response to receiving the second instruction, displacing the gripping device to the port to transfer the storage container.

15. A computer-readable medium comprising instructions which, when executed by a processor of a control system of an automated storage and retrieval system, cause the control system to perform the method of any one of claims 1 to 12.
